# EUROPEAN PATENT SPECIFICATION

(11) **EP 2 714 595 B1**
(45) Date of publication and mention of the grant of the patent: **06.10.2021**
(21) Application number: 11728020.6
(22) Date of filing: 31.05.2011
(51) Int. Cl.: C01G 51/00, C01G 51/04, H01M 4/525

(54) **Method for producing octahedral LiCoO2 particles**
Verfahren zur Herstellung von oktaedrischen LiCoO2-Partikeln
Procédé de production de particules octaédriques LiCoO2

(43) Date of publication of application: 09.04.2014
(73) Proprietor: OMG Kokkola Chemicals Oy, 67101 Kokkola (FI)
(72) Inventor: VANHATALO, Aki, 27230 Lappi (FI); ERIKSSON, Mårten, 68910 Pännäinen (FI); NIITTYKOSKI, Janne, 68600 Pietarsaari (FI)
(74) Representative: Berggren Oy
(86) International application number: PCT/FI2011/050501
(87) International publication number: WO 2012/164141

(56) References cited:
- EP-A1- 2 028 704
- WO-A1-01/00532
- CN-A- 101 293 677
- US-A1- 2004 091 781
- DINGSHENG WANG ET AL: "Shape control of CoO and LiCoO2 nanocrystals", NANO RESEARCH, vol. 3, no. 1, 1 January 2010 (2010-01-01) , pages 1-7, XP55017825, ISSN: 1998-0124, DOI: 10.1007/s12274-010-1001-9
- J.-H. LEE ET AL.: "Mechanism for metal oxide particles synthetized in supercritical water", JOURNAL OF INDUSTRIAL AND ENGINEERING CHEMISTRY, vol. 13, no. 5, 2007, pages 835-841, XP002668218,
- XI WANG ET AL: "Synthesis of Single-Crystalline Co 3 O 4 Octahedral Cages with Tunable Surface Aperture and Their Lithium Storage Properties", JOURNAL OF PHYSICAL CHEMISTRY C, vol. 113, no. 35, 3 September 2009 (2009-09-03), pages 15553-15558, XP55017826, ISSN: 1932-7447, DOI: 10.1021/jp904652m
- None

## Description

### Background

Lithium cobalt oxide (LiCoO₂) is one of the most important cathode materials in Li-ion batteries (LIB). Because the battery performance of LIBs is strongly derived from the cathode material, the properties of LiCoO₂ particles used as a cathode material are very important. For example, the density and the particle size distribution as well as a minimized amount of impurities of the particles are factors affecting for example the size as well as the safety of LIBs. Typical synthesis of LiCoO₂ particles comprises sintering a cobalt oxide or hydroxide precursor and a lithium salt at high temperatures (∼1000 °C) in air with the presence of the excess lithium salt.

Usually, the particle size of LiCoO₂ particles is determined by the sintering process not by the cobalt precursor or the lithium salt. The LiCoO₂ particles, which have been produced from a cobalt precursor with a small particle size by using a high Li/Co molar ratio and long sintering time in order to obtain the desired density and particle size of the particles, exhibit an irregular particle shapes due to agglomeration of fine particles into larger ones. After sintering, the formed particles need to be broken down by a milling process. During such process, fines are easily created and it is difficult to control the particle size and the particle size distribution of the formed LiCoO₂ particles.

The LiCoO₂ cathode material produced by a high Li/Co ratio shows increase in gas generation during the cycling of LIB. While this type of behavior is acceptable when cylindrical shaped battery cells are manufactured, such is not desired when manufacturing laminate cells enclosed in a thin aluminum foil. Therefore, typically finer grades of LiCoO₂ are used in such applications to avoid said problems due to the gas generation.

Furthermore, there is additional cost from having to use the higher Li/Co ratio than what is theoretically needed in order to produce the cathode material having a good battery performance. The long sintering time reduces the productivity of the process, which also increases the energy intensive production process for the cathode material. Meanwhile, the high Li/Co molar ratio that further enhances the sintering, raises the need for manual handling and checking of the sintered cake before milling in order to ensure the quality which further increases the cost. LIB technology is described e.g. in Lithium-Ion Batteries: Science and Technologies, Yoshio, M.; Brodd, R.; Kozawa, A. (Eds.), Springer 2009.

Notwithstanding the state of the art described herein, there is a need for further improvements in cobalt precursor materials and in LiCoO₂ cathode materials and in the production methods of such materials.

### Summary of the Invention

The invention is related to a method of claim 1, for preparation of lithium cobalt oxide (LiCoO₂) particles having an octahedral shape. The invention concerns method for preparation of LiCoO₂ particles having an octahedral shape wherein the average particle size D50 of said LiCoO₂ particles is in the range of 3-30 µm, obtainable by a process in which Co(OH)₂ particles comprising essentially octahedral shape particles, or Co₃O₄ particles obtained from Co(OH)₂ comprising essentially octahedral shape particles, or Co₃O₄ particles comprising essentially octahedral shape particles, and lithium salt are heated at 800 - 1100 °C for 1 - 10 h in air or in other oxygen containing atmosphere. The material can be used especially as a cathode material in Li-ion batteries.

Described are also Co₃O₄ particles comprising essentially octahedral shape particles or particles obtainable from Co(OH)₂ particles comprising essentially octahedral shape particles. The Co₃O₄ particles can be used especially as precursors in the preparation of the LiCoO₂ material.

Described are also Co(OH)₂ particles comprising essentially octahedral shape particles. The Co(OH)₂ particles can be used especially as precursors in the preparation of the Co₃O₄ particles or in the preparation of the LiCoO₂ material. Close prior art:

Document Dingsheng, wang et al., shape control of CoO and LiCoO2 naocrystals", Nano Reseano 1, January 2010 (2010-01-o1) crh, Vol.3, discloses the synthesis of CoO octahedron nanocrystals and LiCoO₂ nanocrystals from as-prepared CoO octahedrons.

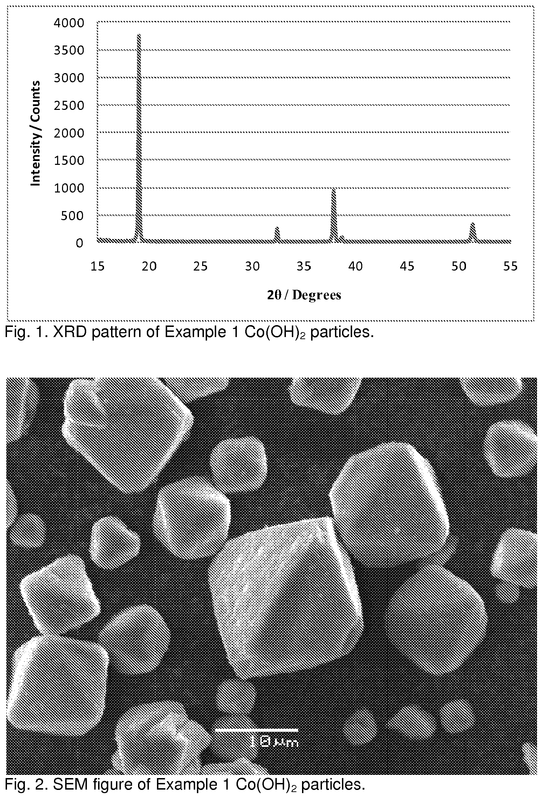

CoO nanocrystals have been explained to have uniform morphology consisting of octahedrons but LiCoO₂ nanocrystals have been explained to have morphology not anymore consisting of octahedrons but polyhedrons, when CoO octahedrons were used as the cobalt. Average particle size of CoO and LiCoO₂ nanocrystals is approximately 100 -300 nm based on the Figures 1 and 2.

Patent document WO 01/00532 discloses the preparation of Co(OH)₂ particles, having morphology of platelike particles in the shape of a hexagon. In the claimed method the particlemorphology does not consist of plate-like particles in the shape of a hexagon, but essentially octahedral particles. Plate-like particles are considered as two dimensional flat particles while essentially octahedral particles as three dimensional particles without a flat dimension. D2 does not disclose Co(OH)₂ particles, with an octahedral particles and it does not either disclose a method for preparing octahedral shaped LiCoO₂ particles from octahedral Co(OH)₂ particles. Patent document US2009/017384 (Iwasaki et al,) discloses a method and a cathode active material useful for producing a composite cathode active material for non-aqueous electrolyte secondary cells. The problem to be solved is connected in a method for improving the properties of core cathode material (storage, charge/discharge characteristics) by treating the surface of the core material by asurface trating material , which is oxide or hydroxide of one or more metal elements. The cathode active material used as a core particles of the composite material seems not to be particlarly limited. It has been said, that cathode active material for core particles can be seletected from those which are use ordinarily used for a non-aqueous electrolyte secondary cells. One of these ordinary alternatives for cathode activematerial, core particles, is lithium cobaltatese. There have been suggested many possible alternatives for shape one of these is octahedral shape. Mentioned core particles are used as an intermediate products for preparing composite material. The cathode active material for core particles can be selected from ordinarily cathode active materials, and one of these ordinary alternatives is octahedral lithium cobaltatese. Therefore this prior art document disloses only ordinary methods for producing octahedral lithium cobaltatese, not the method claimed in claim 1.

### Description of the Drawings

The enclosed drawings form a part of the written description of the invention. They relate to the examples given later and show properties of materials prepared in accordance with the examples.

### Detailed Description of the Invention

The invention concerns method for preparation of a new type of lithium cobalt oxide (LiCoO₂) material. The material comprises LiCoO₂ particles having an octahedral shape obtainable by a process in which Co(OH)₂ particles comprising essentially octahedral shape particles, or Co₃O₄ particles obtainable from Co(OH)₂ comprising essentially octahedral shape particles, or Co₃O₄ particles comprising essentially octahedral shape particles, and lithium salt are heated. Preferably, the LiCoO₂ particles comprise essentially octahedral shape particles, and more preferably essentially consist of essentially octahedral shape particles. The material can be used in Li-ion batteries especially as a cathode material.

Described are also cobalt oxide (Co₃O₄) particles obtainable from cobalt hydroxide (Co(OH)₂) particles comprising essentially octahedral shape particles. Preferably, the Co₃O₄ particles comprise essentially octahedral shape particles, and more preferably, essentially consist of essentially octahedral shape particles. The Co₃O₄ particles can be used as precursors in the preparation of the LiCoO₂ particles.

Described are also Co(OH)₂ particles comprising essentially octahedral shape particles. Preferably, the particles essentially consist of essentially octahedral shape particles. The Co(OH)₂ particles can be used as precursors in the preparation of the Co₃O₄ particles or in the preparation of the LiCoO₂ particles.

Co(OH)₂ particles can be prepared from a cobalt solution containing one or more anions, e.g. sulphate, chloride, or nitrate, and having a cobalt concentration in the range of 20 - 300 g/l by reacting simultaneously with an ammonia containing chemical, for example ammonium hydroxide, and an alkaline hydroxide, for example sodium hydroxide, to precipitate the cobalt ions into a Co(OH)₂ precipitate. Preferably, the cobalt concentration is in the range of 70 - 170 g/l. Feed rates of the ammonia containing chemical and the alkaline hydroxide solution are controlled in order to control pH. A ratio of the feed rates between the alkaline hydroxide solution and the ammonia containing chemical with equivalent concentrations is in the range of 1 - 7. pH is controlled within the range of 10.0 - 14.0, preferably 10.0 - 12.5, to minimize the amount of non-precipitated cobalt ions. Temperature is kept essentially constant at selected temperature in the range of 20 - 70 °C. For a sufficient mixing, the reaction suspension is mixed by an impeller with a rotation speed monitoring. The precipitated particles are filtered, washed with hot ion exchanged water and dried at 100 - 150 °C in air.

Co₃O₄ particles can be prepared by calcinating Co(OH)₂ particles produced by the method described above at 110 - 1200 °C for 0.5 - 20 h in air. Preferably, the particles are calcinated at 500 - 1000 °C for 1 - 10 h. The formed particles may be screened and/or milled after the calcination process.

LiCoO₂ particles can be prepared by mixing Co(OH)₂ particles as a precursor produced by the method described above with Li salt particles, preferably Li₂CO₃ or LiOH particles, with the Li/Co molar-ratio of 0.90 - 1.10, preferably 0.95 - 1.05. No excess of Li need be used, but the ratio can be selected optimally based of desired properties. According to another embodiment, LiCoO₂ particles can be prepared by mixing Co₃O₄ particles as a precursor produced by the method described above with Li salt particles, preferably Li₂CO₃ or LiOH particles, with the Li/Co molar-ratio of 0.90 - 1.10, preferably 0.95 - 1.05, more preferably 1.00. The obtained mixture is calcinated at 800 - 1100 °C for 1 - 10 h in air or in other oxygen containing atmosphere. This calcination process is called as the lithiation process. The formed particles may be screened and/or milled after the lithiation process.

Co(OH)₂ particles produced by the method described above were analyzed for various physical and chemical characteristics including the particle size distribution (including average particle size D50), the tap density (Tde), the surface area (SA), the impurity levels (for example alkali metal, such as sodium, and one or more anions from sulphur, chloride, and nitride), and the overall particle morphology. The average particle size D50, as measured by laser diffraction, was determined to be controllable typically in the range of 3 - 40 µm, especially in the range of 5 - 20 µm. The tap density was controllable typically in the range of 1.7 - 2.8 g/cm³, especially in the range of 1.9 - 2.3 g/cm³. The surface area was determined to be typically in the range of 0.4 - 5 m²/g, especially in the range of 1.0 - 2.0 m²/g. The alkali metal, for example sodium, level was controllable typically to less than 400 ppm, typically to less than 200 ppm, and each of the anions sulphur, chloride, and nitride typically to less than 0.15 %, especially to less than 0.07 %. Other impurities may be controlled based on the feed solutions used during the precipitation method. The Co(OH)₂ particles were determined from scanning electron microscope (SEM) figures to comprise essentially octahedral shape particles. The crystal structure and chemical composition of Co(OH)₂ particles were determined by X-ray powder diffraction (XRD) and the potentiometric titration method. Typical XRD shows a pure β-Co(OH)₂ phase with the P3̅m1 space group. Potentiometric titration gives Co-% values typically close to the theoretical value of 63.4 %.

Co₃O₄ particles produced by the methods described above were analyzed for various physical characteristics including the particle size distribution (including average particle size D50), the tap density, the surface area, the impurity levels (for example alkali metal, such as sodium, and one or more anions from sulphur, chloride, and nitride) and the overall particle morphology. The average particle size D50, as measured by laser diffraction, was determined to be controllable typically in the range of 3 - 30 µm, especially in the range of 5 - 20 µm. The tap density was controllable typically in the range of 1.8 - 3.0 g/cm³, especially in the range of 2.1 - 2.6 g/cm³. The surface area was determined to be typically in the range of 0.2 - 20 m²/g, especially in the range of 0.3 - 2.0 m²/g. The alkali metal, such as sodium, level was controllable typically to less than 400 ppm, especially to less than 200 ppm, and each anion from sulphur, chloride, and nitride typically to less than 0.10 %, especially to less than 0.03 %. Other impurities may be controlled based on the feed solutions used during the precipitation method of Co(OH)₂. A risk of a contamination during a possible milling step is low since the need for a milling is reduced due to a typically formed soft cake in the calcination. In one embodiment, the Co₃O₄ particles were determined from the SEM figures to comprise essentially octahedral shape particles. In another embodiment, the Co₃O₄ particles were determined from the SEM figures to comprise irregular shape particles without essentially octahedral shape particles. The crystal structure and chemical composition of Co₃O₄ particles were determined by X-ray powder diffraction (XRD) and potentiometric titration method. Typical XRD shows a pure Co₃O₄ phase with the spinel crystal structure with the Fd3m space group. Potentiometric titration gives Co-% values typically close to the theoretical value of 73.4 %.

LiCoO₂ particles produced by the methods described above were analyzed for various physical characteristics including the particle size distribution (including average particle size D50), the tap density, the surface area, the impurity levels (for example alkali metal, such as sodium, and one or more anions from sulphur, chloride, and nitride) and the overall particle morphology. The average particle size D50, as measured by laser diffraction, was determined to be controllable typically in the range of 3 - 30 µm, especially in the range of 5 - 20 µm. The tap density was controllable typically in the range of 1.9 - 3.3 g/cm³, especially in the range of 2.7 - 3.1 g/cm³. The surface area was determined to be typically in the range of 0.1 - 0.6 m²/g, especially in the range of 0.2 - 0.5 m²/g. The alkali metal, such as sodium, level was controllable typically to less than 400 ppm, especially to less than 200 ppm, and each anion from sulphur, chloride, and nitride typically to less than 0.10 %, especially to less than 0.02 %. Other impurities may be controlled based on the feed solutions used during the precipitation method of Co(OH)₂. A risk of a contamination during a possible milling step is low since the need for a milling is reduced due to a typically formed soft cake in the calcination. In one embodiment, the LiCoO₂ particles were determined from the SEM figures to comprise essentially octahedral shape particles In another embodiment, the LiCoO₂ particles were determined from the SEM figures to comprise irregular shape particles without essentially octahedral shape particles. The crystal structure and chemical composition of LiCoO₂ particles were determined by X-ray powder diffraction (XRD) and potentiometric titration method and atomic absorption spectroscopy (AAS). Typical XRD shows a pure LiCoO₂ phase with the layered crystal structure with the R3m space group. Potentiometric titration gives Co-% values typically close to the theoretical value of 60.2 %. AAS gives the Li-% values typically close to the theoretical value of 7.1 %.

pH and free Li₂CO₃ of LiCoO₂ particles were determined. pH was determined from a suspension containing 1 g of LiCoO₂ sample in 100 ml of deionized water. Free Li₂CO₃ was determined by mixing 20 g of LiCoO₂ sample in 100 ml of deionized water followed by filtration. The filtered water solution was then titrated by a HCI solution in two steps. In the first, HCI was added until a phenolphthalein indicator changed colour at neutral conditions. In the second step, methyl orange was used as an indicator. The free Li₂CO₃-% can be obtained with the aid of the second step when methyl orange change colour at acidic conditions. pH gives indication about the free hydroxide phases, for example LiOH, in LiCoO₂ particles. Both pH and free Li₂CO₃ give indication of the level of gaseous components in the cell comprising of the LiCoO₂ cathode material. LiOH and Li₂CO₃ can be decomposed electrochemically at cell voltages, generating for example oxygen and carbon dioxide gases. These predominantly gaseous products can lead to pressure buildup in the cell and further generate a safety issue. By minimization of the formation of LiOH and Li₂CO₃ in the preparation method of LiCoO₂ particles, the pressure buildup and the safety issue can be eliminated from the cell. Typically, pH was less than 10.1, especially less than 9.7, and free Li₂CO₃ was less than 0.1 %, especially less than 0.03 %.

Electrochemical properties of the LiCoO₂ particles were determined with coin cell tests. The coin cell testing conditions were as follow: Coin cell: CR2016; Anode: Lithium; Cathode: Active material 95 %, acetylene black 2 %, PVdF 3 %; Coating thickness 100 µm on 20 µm; Al foil, pressing by 6 t/cm² pressure; Cathode size 1 cm²; Electrolyte: 1 M LiPF₆ (EC/DMC = 1/2); Separator: Glass filter; Charging: 0.2 mA/cm² (about 0.15 C) up to 4.30 V (vs. Li/Li⁺); 1^{st} discharge: 0.2 mA/cm² to 3.00 V (vs. Li/Li⁺); 2^{nd} discharge: 2.0 mA/cm² to 3.00 V (vs. Li/Li⁺); 3^{rd} discharge: 4.0 mA/cm² to 3.00 V (vs. Li/Li⁺); 4^{th} discharge: 8.0 mA/cm² to 3.00 V (vs. Li/Li⁺); 5^{th} discharge - 60^{th} discharge 4.0 mA/cm² to 3.00 V (vs. Li/Li⁺). Rate capability is determined as 8.0 mA/cm² / 0.2 mA/cm². Typically, the initial charge capacity was more than 154 mAh/g, especially more than 155 mAh/g, the rate capability was more than 85 %, especially more than 95 %, and the cyclability (5-30) was more than 70 %, especially more than 90 %.

Octahedral shape means a shape of a polyhedron with eight faces and six vertexes. All the faces have shape of a triangle. Height, length and depth of the octahedron are determined with the distance between three pair of opposite vertexes. In a regular octahedron, the ratio of height:length:depth is 1:1:1. In this case, such distortion is allowed that any of the previous ratios can be in the range of 0.3 - 3. Such distortion is also allowed that faces can contain voids and nodules and triangle edges are not necessarily straight lines but can contain curves. In accordance with the invention, preferably more than 20 %, more preferably more than 50 % of the Co(OH)₂ particles have essentially octahedral shape. Most preferably essentially all particles have essentially octahedral shape.

In accordance with the invention, LiCoO₂ particles with a high density and a good electrochemical quality could be obtained when a low Li/Co ratio was used in the lithiation. Typically, when a low Li/Co ratio has been used in the lithiation, the density of the formed particles has become low, which is not desirable for a good quality cathode material. Further in accordance with the invention, LiCoO₂ particles with a high density and a good electrochemical quality as well as a low risk of a pressure buildup in a cell were obtained when a low Li/Co ratio was used in the lithiation. Typically, the density of the formed particles in the lithiation has been increased with the aid of using a high Li/Co-ratio. Usually this has lead to deterioration of the electrochemical quality and to an increased risk of pressure buildup in a cell. In addition, a high Li/Co ratio can lead to difficulties to control a particle size distribution and morphology of the formed particles in the lithiation as well as an increased contamination risk during milling due to a typically formed hard cake in the lithiation., The morphology of the formed LiCoO₂ particles in the lithiation could be remained essentially the same compared to that of the cobalt precursor particles. Preferably more than 20 %, more preferably more than 50 %, most preferably essentially all of the LiCoO₂ particles have the same morphology than those of cobalt precursor particles.

Co(OH)₂ particles could be formed whose morphology remained essentially the same after the lithiation. Further Co(OH)₂ particles could be formed that can be used as a precursor to obtain LiCoO₂ particles with a high density and good electrochemical quality. Further, Co(OH)₂ particles could be formed that can be used as a precursor to obtain LiCoO₂ particles with a high density and good electrochemical quality, and with a low risk of a pressure buildup in a cell.

Co₃O₄ particles could be formed whose morphology remained essentially the same after the lithiation. Further, Co₃O₄ particles could be formed that can be used as a precursor to obtain LiCoO₂ particles with a high density and good electrochemical quality. Further, Co₃O₄ particles could be formed that can be used as a precursor to obtain LiCoO₂ particles with a high density and good electrochemical quality, and with a low risk of a pressure buildup in a cell.

One or more dopants from the group of Mg, Ca, Sr, Ti, Zr, B, Al, and F can be added in the LiCoO₂ particles. The dopants can be added in one or more steps including the precipitation step, the calcination step, the lithiation step and a separate step after the lithiation. The concentration of the dopants is preferably in the range of 0.05 - 5 mol-% from Co. In general, dopants are important for the performance of a cathode material in LIB. Dopants are added for example to improve thermal and high voltage stability as well as to minimize the capacity fade of the cathode material. Usually, physical properties, for example tap density, of the cathode materials are deteriorated when dopants are added. In one embodiment of the invention, the tap density of the doped LiCoO₂ particles was decreased by maximum of 5 % compared to that of the non-doped particles.

### Examples

The following examples illustrate the preparation and the properties of the Co(OH)₂ particles, Co₃O₄ particles and LiCoO₂ particles, but these examples are not considered to be limiting the scope of this invention.

### Example 1. Preparation of Co(OH)₂ particles comprising essentially octahedral shape particles.

Co(OH)₂ particles were precipitated in a 150 liter reactor by pumping cobalt chloride solution (80g/l), ammonium hydroxide solution (220g/l) and sodium hydroxide solution (220g/l) into it. Feed rates of sodium hydroxide and ammonium hydroxide solutions were controlled in order to keep pH in the level of 10.0 - 12.5 to precipitate all cobalt ions from the solution. A ratio of the feed rates between sodium hydroxide and ammonium hydroxide was in the range of 2 - 4. Temperature was kept constant at 40 °C. Mixing in the reactor was controlled (80 rpm). The precipitated particles were collected sequentially as an overflow. The precipitated particles were filtered, washed with hot ion exchanged water and dried at 110 °C in air.

Well crystallized β-Co(OH)₂ phase with the P3̅m1 space group was observed by X-ray powder diffraction (XRD) (Fig. 1). Impurity phases were not observed. Co-% of 62.9 %, determined by a potentiometric titration method, gave further proof about the formation of the pure Co(OH)₂ without impurities. The SEM figure shows that the formed Co(OH)₂ particles were dense with smooth surface structure and the particles were comprising essentially octahedral shape particles (Fig. 2). The average particle size of the formed Co(OH)₂ particles D50 was 15.7 µm with D10 and D90 values of 5.7 µm and 31.7 µm, respectively. Tap density (Tde) of the formed Co(OH)₂ particles was high 2.29 g/cm³ and surface area (SA) low 1.5 m²/g. The particles formed in this example are used as a precursor in the latter examples.

### Example 2. Preparation of Co₃O₄ particles comprising essentially octahedral shape particles.

Co₃O₄ particles were prepared by the method presented in the Example 1, but further calcinating the formed Co(OH)₂ particles comprising essentially octahedral shape particles at 700 °C for 2 h in air. This example shows that morphology and physical properties of the Co(OH)₂ particles comprising essentially octahedral shape particles can strongly affect on the morphology and physical properties of the Co₃O₄ particles formed by the calcination process.

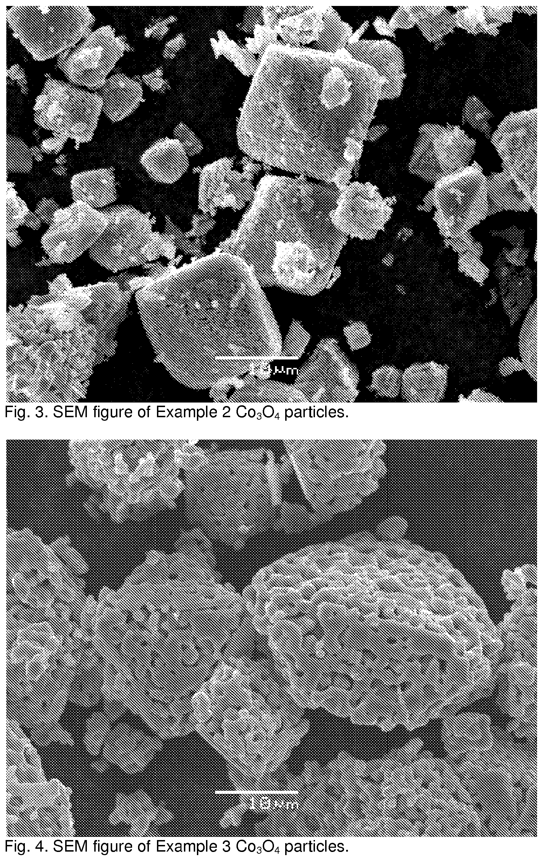

Co₃O₄ particles with the spinel crystal structure (Fd3m space group) were formed by the calcination process. Co-% of 74.2 % gave further proof about the transformation of the Co(OH)₂ phase to the Co₃O₄ phase. Insignificant sintration of the particles occurred during the calcination, since the morphology and the physical properties of the particles remained essentially the same after the calcination. This can be observed from the following data. The SEM figure shows that the Co₃O₄ particles were comprising essentially octahedral shape particles (Fig. 3). The D50, D10 and D90 values were 15.5 µm, 5.4 µm and 31.1 µm, respectively. Tde was 2.26 g/cm³ and SA 1.6 m²/g. The above values are essentially the same as those of the Example 1 values (Table 1). The particles formed in this example are used as a precursor in the latter examples.

### Example 3. Preparation of Co₃O₄ particles with modified morphology from Co(OH)₂ particles comprising essentially octahedral shape particles.

Co₃O₄ particles were prepared by the method presented in the Example 1, but further calcinating formed Co(OH)₂ particles comprising essentially octahedral shape particles at 900 °C for 2 h in air. This example shows that morphology and physical properties of Co₃O₄ particles formed by the calcination process can be modified by the process conditions.

Co₃O₄ particles with the spinel crystal structure (Fd3m space group) were formed by the calcination process. Co-% of 74.2 % gave further proof about the transformation of the Co(OH)₂ phase to the Co₃O₄ phase. Sintration of the particles occurred during the calcination, since the particles morphology and physical properties were changed by the calcination process. This can be observed from the following data. The SEM figure shows that the Co₃O₄ particles were comprising irregular shape particles without essentially octahedral shape particles (Fig. 4). The D50, D10 and D90 values were 14.4 µm, 6.4 µm and 26.0 µm, respectively. Tde was 2.56 g/cm³ and SA 0.55 m²/g. The particle size distribution is narrower, Tde higher and SA lower compared to those of the Example 1 and Example 2 values (Table 1). The particles formed in this example are used as a precursor in the latter examples.

### Example 4. Preparation of LiCoO₂ particles comprising essentially octahedral shape particles from Example 1 Co(OH)₂ particles.

Co(OH)₂ particles, prepared by the method presented in the Example 1, were intimately mixed with Li₂CO₃ particles with the Li/Co molar-ratio of 1.00. The obtained mixture was further calcinated at 1000 °C for 5 h in air. This calcination process is called as a lithiation process. This example shows that morphology and physical properties of the Co(OH)₂ particles comprising essentially octahedral shape particles can strongly affect on the morphology and physical properties of the LiCoO₂ particles formed by the lithiation process.

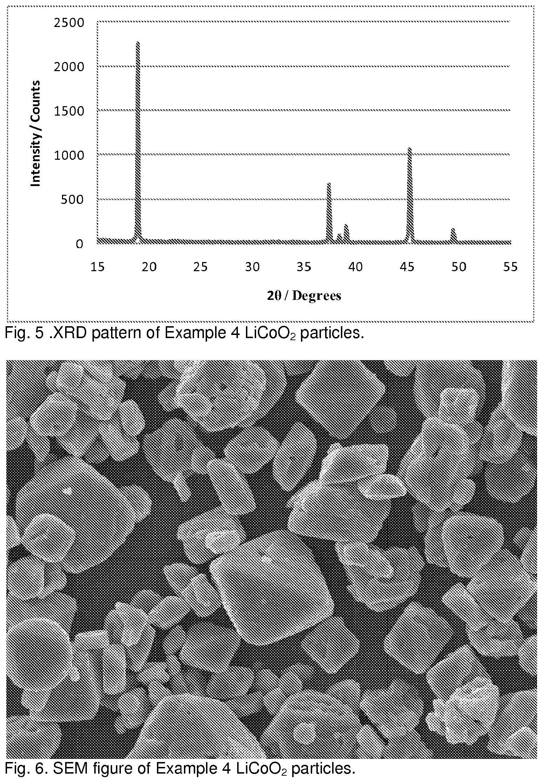

LiCoO₂ particles with the layered crystal structure (R3m space group) were formed by the lithiation process (Fig. 5). No traces of Co(OH)₂ or Co₃O₄ were observed. Co-% and Li-% (Li determined by atomic absorption spectroscopy) were 59.7 % and 7.0 %, respectively, that further proves the formation of the LiCoO₂ particles. The morphology of the particles remained essentially the same after the lithiation. The physical properties of the particles were slightly modified by the lithiation process. These can be observed from the following data. The SEM figure shows that the formed LiCoO₂ particles were comprising essentially octahedral shape particles (Fig. 6). The D50, D10 and D90 values were 13.8 µm, 5.9 µm and 25.9 µm, respectively. Tde was 2.88 g/cm³ and SA 0.41 m²/g. The above results show the narrowed particle size distribution and densification of the particles due to the lithiation when compared to those of Example 1 values (Table 1).

pH and free Li₂CO₃ were determined as described in the description. Both of pH and free Li₂CO₃ give indication about the amount of gaseous components in the cell. pH and free Li₂CO₃ of formed LiCoO₂ particles were 9.66 and 0.017 %. Both of the values are low indicating a low risk of pressure buildup in the cell comprised of the LiCoO₂ particles containing essentially octahedral shape particles.

The coin cell testing was performed as described in the description. The coin-cell test showed the high initial charge capacity (155.0 mAh/g), good rate capability (96.5 %) and good cyclability (90.1 %, 5-30; 74.6 %, 5-60). These results indicate that LiCoO₂ particles comprising essentially octahedral shape particles have a good electrochemical quality as a cathode material for LIB.

### Example 5. Preparation of LiCoO₂ particles with modified morphology from Example 1 Co(OH)₂ particles.

Co(OH)₂ particles, prepared by the method presented in the Example 1, were intimately mixed with Li₂CO₃ particles with the Li/Co molar-ratio of 1.04. The obtained mixture was further calcinated at 1050 °C for 5 h in air. This example shows that morphology and physical properties of LiCoO₂ particles formed by the lithiation process can be modified by the process conditions, but the formed particles have still good performance as a cathode material.

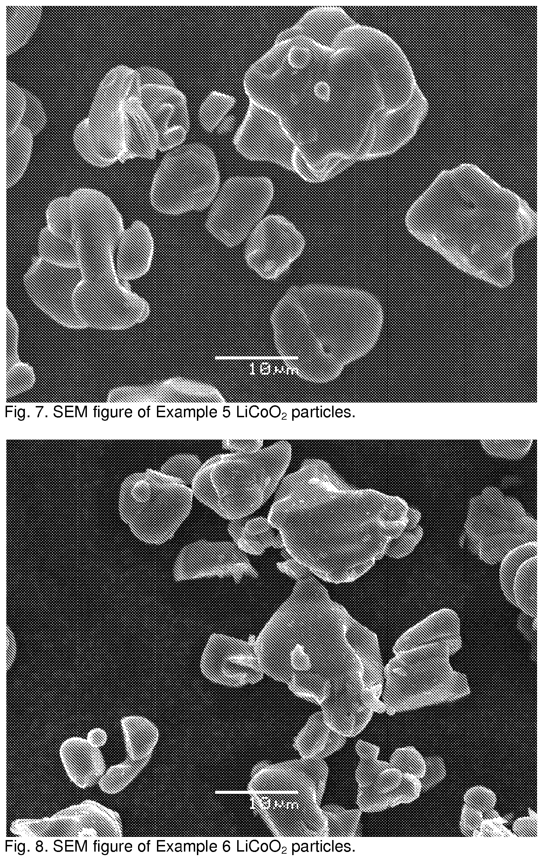

LiCoO₂ particles with the layered crystal structure (R3m space group) were formed by the lithiation process. No traces of Co(OH)₂ or Co₃O₄ were observed. Co-% and Li-% were 59.3 % and 7.3 %, respectively, that further proves the formation of the LiCoO₂ particles. The morphology and physical properties of the particles were modified by the lithiation process. This can be observed from the following data. The SEM figure shows that the LiCoO₂ particles were comprising irregular shape particles without essentially octahedral shape particles (Fig. 7). The D50, D10 and D90 values were 14.7 µm, 8.4 µm and 26.6 µm, respectively. Tde was 2.78 g/cm³ and SA 0.16 m²/g. The above results show the narrowed particle size distribution and densification of the particles when compared to those of the Example 1 hydroxide values, but increased particle size with less dense particles when compared to those of the Example 4 LiCoO₂ values (Table 1).

pH and free Li₂CO₃ were 9.63 and 0.024 %, respectively. Both of the values are low indicating a low risk of pressure buildup in the cell. The coin cell testing was performed as described in the description. The coin-cell test showed the high initial charge capacity (157.8 mAh/g) and moderate rate capability (89.5 %). These results indicate that LiCoO₂ particles prepared from Co(OH)₂ particles comprising essentially octahedral shape particles have a good electrochemical quality as a cathode material for LIB.

### Example 6. Preparation of LiCoO₂ particles with modified morphology from Example 2 Co₃O₄ particles.

Co₃O₄ particles, prepared by the method presented in the Example 2, were intimately mixed with Li₂CO₃ particles with the Li/Co molar-ratio of 1.00. The obtained mixture was further calcinated at 1000 °C for 5 h in air. This example shows that morphology and physical properties of LiCoO₂ particles formed by the lithiation process can be modified by the process conditions, but the formed particles have still good performance as a cathode material.

LiCoO₂ particles with the layered crystal structure (R3m space group) were formed by the lithiation process. No traces of Co₃O₄ were observed. Co-% and Li-% were 59.7 % and 7.0 %, respectively, that further proves the formation of the LiCoO₂ particles. The morphology and physical properties of the particles were modified by the lithiation process. This can be observed from the following data. The SEM figure shows that the LiCoO₂ particles were comprising irregular shape particles without essentially octahedral shape particles (Fig. 8). The D50, D10 and D90 values were 18.5 µm, 7.5 µm and 38.1 µm, respectively. Tde was 3.01 g/cm³ and SA 0.21 m²/g. The above results show the increased particle size and densification of the particles when compared to those of the Example 2 oxide values as well as to those of the Example 4 LiCoO₂ values (Table 1).

pH and free Li₂CO₃ were 9.83 and 0.046 %, respectively. The values are higher than those of the Example 4 values, but still low indicating a low risk of pressure buildup in the cell. The coin cell testing was performed as described in the description . The coin-cell test showed the high initial charge capacity (156.8 mAh/g) and moderate rate capability (88.2 %). These results indicate that LiCoO₂ particles prepared from Co₃O₄ particles comprising essentially octahedral shape particles have a good electrochemical quality as a cathode material for LIB.

### Example 7. Preparation of LiCoO₂ particles with modified morphology from Example 3 Co₃O₄ particles.

Co₃O₄ particles, prepared by the method presented in the Example 3, were intimately mixed with Li₂CO₃ particles with the Li/Co molar-ratio of 0.98. The obtained mixture was further calcinated at 1000 °C for 5 h in air. This example shows that morphology and physical properties of LiCoO₂ particles formed by the lithiation process can be modified by the process conditions,but have still good performance as a cathode material.

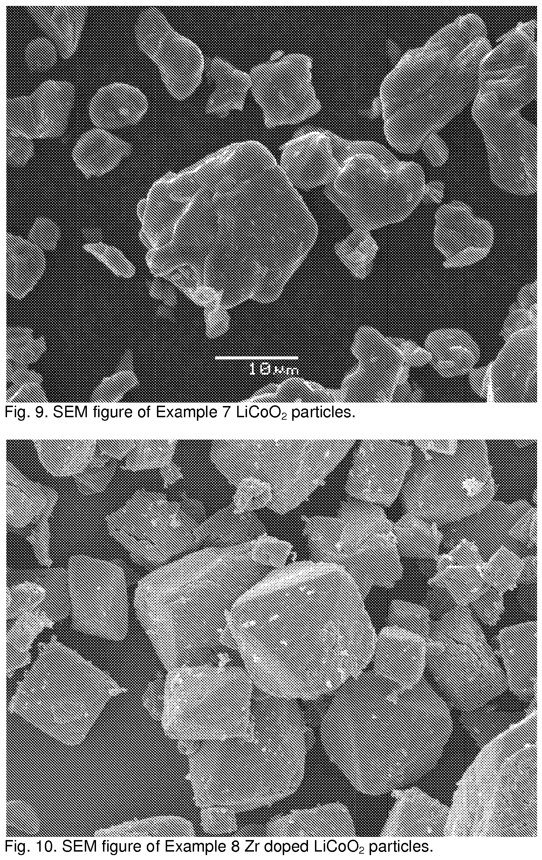

LiCoO₂ particles with the layered crystal structure (R3m space group) were formed by the lithiation process. No traces of Co₃O₄ were observed. Co-% and Li-% were 60.0 % and 6.9 %, respectively, that further proves the formation of the LiCoO₂ particles. The morphology and physical properties of the particles were modified by the lithiation process. This can be observed from the following data. The SEM figure shows that the LiCoO₂ particles were comprising irregular shape particles without essentially octahedral shape particles (Fig. 9). The D50, D10 and D90 values were 17.7 µm, 7.7 µm and 32.7 µm, respectively. Tde was 2.94 g/cm³ and SA 0.27 m²/g. The above results show the increased particle size and densification of the particles when compared to those of the Example 3 oxide values as well as those of the Example 4 LiCoO₂ values (Table 1).

pH and free Li₂CO₃ were 9.90 and 0.061 %, respectively. The values are higher than those of the Example 4 values, but still low indicating a low risk of pressure buildup in the cell. The coin cell testing was performed described in the description. The coin-cell test showed the high initial charge capacity (154.9 mAh/g) and moderate rate capability (87.4 %). These results indicate that LiCoO₂ particles whose preparation method includes Co(OH)₂ particles comprising essentially octahedral shape particles have a good electrochemical quality as a cathode material for LIB.

### Example 8. Preparation of doped LiCoO₂ particles comprising essentially octahedral shape particles from Example 1 Co(OH)₂.

Doped LiCoO₂ particles were prepared by the method presented in the Example 4, but 0.2 mol-% of dopants (Mg, Al, Ti, Zr, B, Al+Ti, Mg+AI, Al+Zr, F, Ca, Sr) were intimately mixed with Co(OH)₂ particles prior the mixing with Li₂CO₃. The dopants were added as oxides except F as LiF and Ca as well as Sr as hydroxides. This example shows that morphology and physical properties of the LiCoO₂ particles comprising essentially octahedral shape particles remain essentially the same even if the dopants are added.

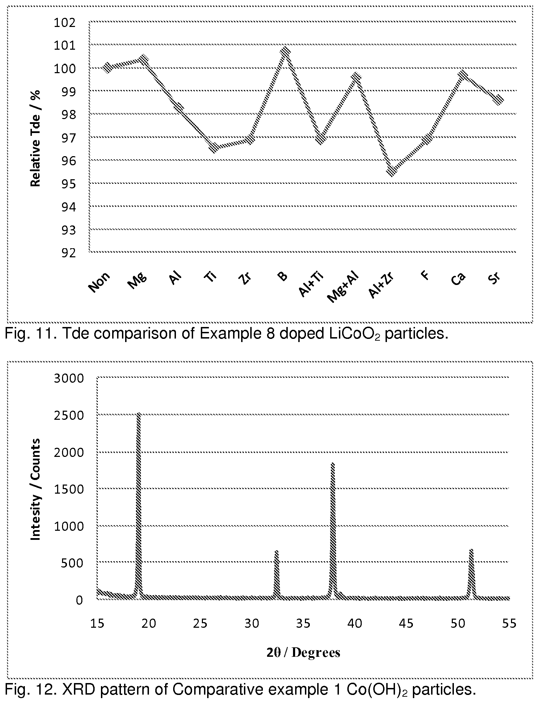

Doped LiCoO₂ particles with the layered crystal structure (R3̅m space group) were formed by the lithiation process. No traces of Co(OH)₂ or Co₃O₄ were observed. The SEM figure shows that the LiCoO₂ particles were comprising essentially octahedral shape particles (Fig. 10). Density of the doped LiCoO₂ particles was only slightly lower than that of the Example 4 non-doped LiCoO₂ particles. Tde of the doped particles was decreased by maximum of 5 % compared to that of the non-doped particles (Fig. 11). These results indicate that one or more dopants can be easily added to LiCoO₂ particles comprising essentially octahedral shape particles.

The following comparative examples show the preparation and properties of typical prior art products.

### Comparative example 1. Preparation of comparative Co(OH)₂ particles without octahedral shape particles.

Co(OH)₂ particles were precipitated in 150 liter reactor by pumping cobalt sulphate solution (80g/l), ammonium hydroxide solution (220g/l) and sodium hydroxide solution (220g/l) into it. Feed rates of sodium hydroxide and ammonium hydroxide solutions were controlled in order to keep pH in the level of 10.0 - 12.5 to precipitate all cobalt ions from the solution. A ratio of the feed rates between sodium hydroxide and ammonium hydroxide was in the range of 3 - 5. Temperature was kept constant at 65 °C. Mixing in the reactor was controlled (240 rpm). The precipitated particles were collected sequentially as an overflow. The precipitated particles were filtered, washed with hot ion exchanged water and dried at 110 °C in air. This comparative example shows Co(OH)₂ particles that can be considered as typical particles in the field.

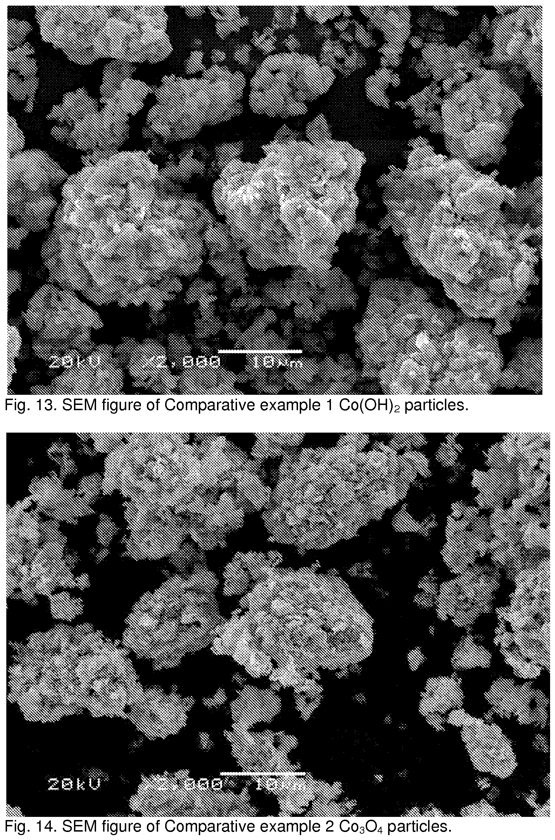

Well crystallized β-Co(OH)₂ phase with the P3̅m1 space group was observed by X-ray powder diffraction (XRD) (Fig. 12). Impurity phases were not observed. Co-% was 62.7 % giving further proof about the formation of the pure Co(OH)₂ without impurities. Morphology and the physical properties of the formed Co(OH)₂ particles were clearly different compared to those of the Example 1 ones. The SEM figure shows that the formed Co(OH)₂ particles were not dense, had voids in the surface, and the particles were comprising irregular particles without octahedral shape particles (Fig. 13). The D50, D10 and D90 values were 11.0 µm, 1.1 µm and 20.5 µm, respectively. Tde was 1.53 g/cm³ and SA 2.4 m²/g. The particle size of the formed particles is smaller, Tde is lower and SA is higher compared to those of the Example 1 values (Table 1). These results indicate that the properties of the Co(OH)₂ particles are superior when the essentially octahedral shape particles are formed as described in the Example 1. Benefits are further shown in the examples, where LiCoO₂ particles are prepared from the Co(OH)₂ particles.

### Comparative example 2. Preparation of comparative Co₃O₄ particles without octahedral shape particles.

Co₃O₄ particles were prepared by the method presented in the Comparative example 1, but further calcinating formed Co(OH)₂ particles at 900 °C for 2 h in air. This comparative example shows Co₃O₄ particles that can be considered as typical particles in the field.

Co₃O₄ particles with the spinel crystal structure (Fd3m space group) were formed. Co-% of 73.2 % gave further proof about the transformation of the Co(OH)₂ phase to the Co₃O₄ phase. Insignificant sintration of the particles occurred during the calcination, since the morphology and the physical properties of the particles remained essentially the same after the calcination. This can be observed from the following data. The SEM figure shows that the formed Co₃O₄ particles were not dense, had voids in the surface, and the particles were comprising irregular particles without octahedral shape particles (Fig. 14). The D50, D10 and D90 values were 11.9 µm, 2.3 µm and 20.7 µm, respectively. Tde was 1.64 g/cm³ and SA 2.2 m²/g. The above values are essentially the same as those of the Comparative example 1 values, but the formed particles are smaller, Tde is lower and SA is higher compared to those of the Example 2 and Example 3 values (Table 1). These results indicate that the properties of the Co₃O₄ particles are superior when the essentially octahedral shape particles are formed as described in the Examples 2 and 3. Benefits are further shown in the examples, where LiCoO₂ particles are prepared from the Co₃O₄ particles.

### Comparative example 3. Preparation of comparative LiCoO₂ particles without octahedral shape particles from Comparative example 1 Co(OH)₂ particles.

Co(OH)₂ particles, prepared by the method presented in the Comparative example 1, were intimately mixed with Li₂CO₃ particles with the Li/Co molar-ratio of 1.00. The obtained mixture was further calcinated at 1000 °C for 5 h in air. This comparative example shows LiCoO₂ particles prepared using the same Li/Co ratio and same temperature as in the Example 4, but from Co(OH)₂ particles without octahedral shape particles.

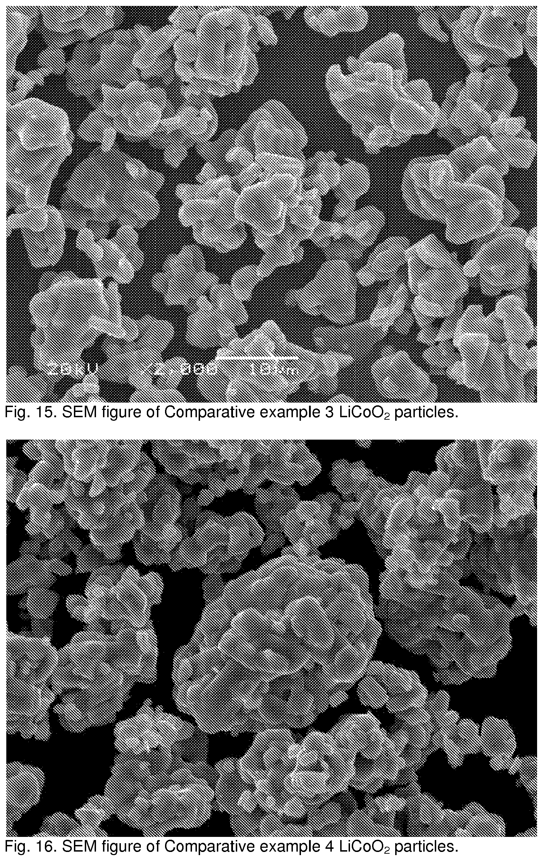

LiCoO₂ particles with the layered crystal structure (R3m space group) were formed by the lithiation process. No traces of Co(OH)₂ or Co₃O₄ were observed. Co-% and Li-% were 59.7 % and 7.1 %, respectively, that further proves the formation of the LiCoO₂ particles. The morphology and physical properties of the particles were modified by the lithiation process. These can be observed from the following data. The SEM figure shows that the LiCoO₂ particles were comprising irregular shape particles without essentially octahedral shape particles (Fig. 15). The D50, D10 and D90 values were 12.3 µm, 3.6 µm and 21.5 µm, respectively. Tde was 2.53 g/cm³ and SA 0.57 m²/g. The above results show the increased particle size and densification of the particles when compared to those of the Comparative Example 1 Co(OH)₂ values, but particles are clearly less dense when compared to those of the Examples 4-7 LiCoO₂ values (Table 1). The latter is clear indication of the benefit of LiCoO₂ particles comprising essentially octahedral shape particles as well as LiCoO₂ particles whose preparation method includes Co(OH)₂ particles comprising essentially octahedral shape particles.

pH and free Li₂CO₃ were 9.77 and 0.028 %, respectively. The values are higher than those of the Example 4 values, but still low indicating a low risk of pressure buildup in the cell. The coin-cell test showed the moderate initial charge capacity (154.1 mAh/g), good rate capability (96.6 %) and moderate cyclability (88.9 %, 5-30; 75.8 %, 5-60). These values are slightly lower than those of the Example 4 values indicating good but slightly decreased electrochemical quality.

This comparative example together with Examples 4-7 showed that electrochemically good quality LiCoO₂ particles without octahedral shape particles can be prepared with the low Li/Co metal ratio, but the density of the particles is remaining at very low level. LiCoO₂ particles comprising essentially octahedral shape particles as well as LiCoO₂ particles whose preparation method includes Co(OH)₂ particles comprising essentially octahedral shape particles offer the option of having both properties, high density and electrochemically good quality, in the particles.

### Comparative example 4. Preparation of comparative LiCoO₂ particles without octahedral shape particles from Comparative example 2 Co₃O₄ particles.

Co₃O₄ particles, prepared by the method presented in the Comparative example 2, were intimately mixed with Li₂CO₃ particles with the Li/Co molar-ratio of 1.00. The obtained mixture was further calcinated at 1000 °C for 5 h in air. This comparative example shows LiCoO₂ particles prepared using the same Li/Co ratio and same temperature as in the Example 4, but from Co₃O₄ particles without octahedral shape particles.

LiCoO₂ particles with the layered crystal structure (R3m space group) were formed by the lithiation process. No traces of Co₃O₄ were observed. Co-% and Li-% were 59.8 % and 7.0 %, respectively, that further proves the formation of the LiCoO₂ particles. The morphology and physical properties of the particles were modified by the lithiation process. This can be observed from the following data. The SEM figure shows that the LiCoO₂ particles were comprising irregular shape particles without essentially octahedral shape particles (Fig. 16). The D50, D10 and D90 values were 12.1 µm, 4.8 µm and 21.3 µm, respectively. Tde was 2.61 g/cm³ and SA 0.32 m²/g. The above results show the increased particle size and densification of the particles when compared to those of the Comparative example 2 Co₃O₄ values, but particles are clearly less dense when compared to those of the Examples 4-7 LiCoO₂ values (Table 1). The latter is clear indication of the benefit of LiCoO₂ particles comprising essentially octahedral shape particles as well as LiCoO₂ particles whose preparation method includes Co(OH)₂ particles comprising essentially octahedral shape particles.

pH and free Li₂CO₃ were 9.56 and 0.013 %, respectively. The values are lower when compared to those of the Example 4-7 values indicating a low risk of pressure buildup in the cell. The coin-cell test showed the moderate initial charge capacity (154.1 mAh/g), good rate capability (97.5 %) and moderate cyclability (88.7 %, 5-30). These values are slightly lower than those of the Example 4 values indicating good but slightly decreased electrochemical quality.

This comparative example together with Examples 4-7 showed that electrochemically good quality LiCoO₂ particles without octahedral shape particles can be prepared with the low Li/Co metal ratio of 1.00, but the density of the particles is remaining at very low level. LiCoO₂ particles comprising essentially octahedral shape particles as well as LiCoO₂ particles whose preparation method includes Co(OH)₂ particles comprising essentially octahedral shape particles offer the option of having both properties, high density and electrochemically good quality, in the particles.

### Comparative example 5. Preparation of comparative LiCoO₂ particles without octahedral shape particles from Comparative example 2 Co₃O₄ particles via milling step.

Co₃O₄ particles, prepared by the method presented in the Comparative example 2, were milled by a jet mill to obtain D50 of 1.4 µm. The milled Co₃O₄ particles were intimately mixed with Li₂CO₃ particles with the Li/Co molar-ratio of 1.05. The obtained mixture was further calcinated at 1000 °C for 5 h in air. This comparative example shows LiCoO₂ particles prepared by the method where LiCoO₂ particles are grown with the aid of excess amount of Li and small particle size Co₃O₄.

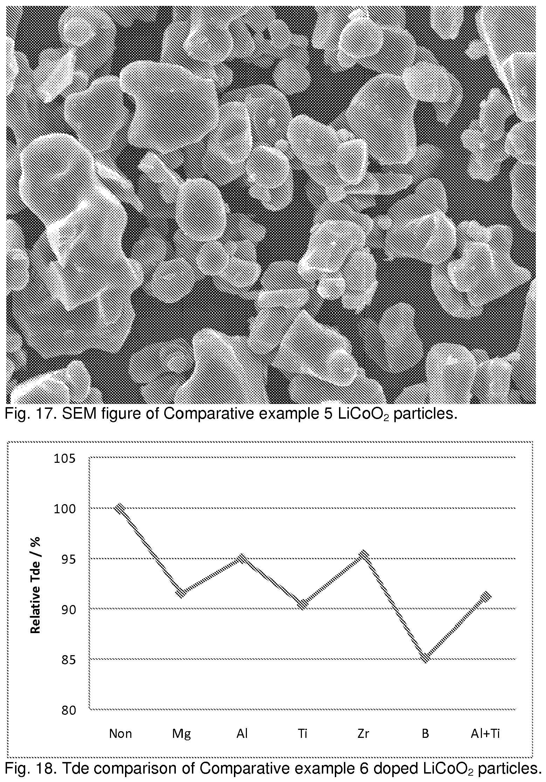

LiCoO₂ particles with the layered crystal structure (R3m space group) were formed by the lithiation process. No traces of Co₃O₄ were observed. Co-% and Li-% were 58.2 % and 7.0 %, respectively, that further proves the formation of the LiCoO₂ particles. The morphology and physical properties of the particles were modified by the lithiation process. This can be observed from the following data. The SEM figure shows that the LiCoO₂ particles were comprising irregular shape particles without essentially octahedral shape particles (Fig. 17). The D50, D10 and D90 values were 9.9 µm, 5.2 µm and 18.5 µm, respectively. Tde was 2.86 g/cm³ and SA 0.33 m²/g. The above results show that particles are smaller, but only slightly less dense when compared to those of the Examples 4-7 LiCoO₂ values (Table 1).

pH and free Li₂CO₃ were 9.96 and 0.063 %, respectively. The values are higher when compared to those of the Example 4-7 values, indicating an increased risk of pressure buildup in the cell. The coin-cell test showed the moderate initial charge capacity (153.6 mAh/g), moderate rate capability (90.8 %) and moderate cyclability (88.3 %, 5-30; 57.4 %, 5-60). These values are lower than those of the Example 4 values indicating moderate electrochemical quality.

This comparative example together with Examples 4-7 showed that high density LiCoO₂ particles without octahedral shape particles can be prepared with the high Li/Co metal ratio, but the electrochemically quality of the particles is deteriorated and risk of pressure buildup in the cell is increased. LiCoO₂ particles comprising essentially octahedral shape particles as well as LiCoO₂ particles whose preparation method includes Co(OH)₂ particles comprising essentially octahedral shape particles offer the option of having all properties, high density and electrochemically good quality in the particles as well as low risk of pressure buildup in the cell.

### Comparative example 6. Preparation of doped LiCoO₂ particles without essentially octahedral shape particles.

Doped LiCoO₂ particles were prepared by the method presented in the Comparative example 4, but 0.2 mol-% of dopants (Mg, Al, Ti, Zr, B, Al+Ti) were intimately mixed with Co₃O₄ particles prior the mixing with Li₂CO₃. The dopants were added as oxides. This example shows that physical properties of the LiCoO₂ particles without essentially octahedral shape particles are deteriorated when the dopants are added.

Doped LiCoO₂ particles with the layered crystal structure (R3̅m space group) were formed by the lithiation process. No traces of Co₃O₄ were observed. Density of the doped LiCoO₂ particles was clearly lower than that of the Comparative example 4 non-doped LiCoO₂ particles. Tde of the doped particles was decreased by more than 5 % compared to that of the non-doped particles (Fig. 18) that is much more dramatic drop than in Fig. 11 where LiCoO₂ particles are comprising essentially octahedral shape particles. This comparative example together with Example 8 indicate that one or more dopants can be added more easily to LiCoO₂ particles comprising essentially octahedral shape particles compared to those of LiCoO₂ particles without essentially octahedral shape particles. This is one more benefit for LiCoO₂ particles comprising essentially octahedral shape particles.

**Table 1. Summary of data presented in examples.**

| Material | D10 / µm | D50 / µm | D90 / µm | Tde/g/cm ³ | SA/m²/g | Co-% | Li-% | pH | Free Li₂CO 3-% | Initial discharge capacity mAh/g | Rate capability % | Cyclability (5-30, 5-60) % |
|---|---|---|---|---|---|---|---|---|---|---|---|---|
| Ex.1 | 5.7 | 15.7 | 31.7 | 2.29 | 1.5 | 62.9 | | | | | | |
| Ex.2 | 5.4 | 15.5 | 31.1 | 2.26 | 1.6 | 74.2 | | | | | | |
| Ex.3 | 6.4 | 14.4 | 26.0 | 2.56 | 0.55 | 73.3 | | | | | | |
| Co.ex. 1 | 1.1 | 11.0 | 20.5 | 1.53 | 2.4 | 62.7 | | | | | | |
| Co.ex. 2 | 2.3 | 11.9 | 20.7 | 1.64 | 2.2 | 73.2 | | | | | | |
| Ex.4 | 5.9 | 13.8 | 25.9 | 2.88 | 0.41 | 59.7 | 7.0 | 9.66 | 0.017 | 155.0 | 96.5 | 90.1,74.6 |
| Ex.5 | 8.4 | 14.7 | 26.6 | 2.78 | 0.16 | 59.3 | 7.3 | 9.63 | 0.024 | 157.8 | 89.5 | |
| Ex.6 | 7.5 | 18.5 | 38.1 | 3.01 | 0.21 | 59.7 | 7.0 | 9.83 | 0.046 | 156.8 | 88.2 | |
| Ex.7 | 7.7 | 17.7 | 32.7 | 2.94 | 0.27 | 60.0 | 6.9 | 9.90 | 0.061 | 154.9 | 87.4 | |
| Co.ex. 3 | 3.6 | 12.3 | 21.5 | 2.53 | 0.57 | 59.7 | 7.1 | 9.77 | 0.028 | 154.1 | 96.6 | 88.9,75.8 |
| Co.ex. 4 | 4.8 | 12.1 | 21.3 | 2.61 | 0.32 | 59.8 | 7.0 | 9.56 | 0.013 | 154.1 | 97.5 | 88.7,- |
| Co.ex. 5 | 5.2 | 9.9 | 18.5 | 2.86 | 0.33 | 58.2 | 7.0 | 9.96 | 0.063 | 153.6 | 90.8 | 88.3,57.4 |

### Disclaimer

Based upon the foregoing disclosure, it should now be apparent that the Co(OH)₂ particles, the Co₃O₄ particles and the LiCoO₂ particles and the preparation such particles as described herein will carry out the embodiments set forth hereinabove. It is, therefore, to be understood that any variations evident fall within the scope of the claimed invention and thus, the selection of specific component elements can be determined without departing from the spirit of the invention herein disclosed and described.

## Claims

1. Method for preparation of LiCoO₂ particles having an octahedral shape wherein the average particle size D50 of said LiCoO₂ particles is in the range of 3-30 µm, **characterized** thereof that Co(OH)₂ particles comprising octahedral shape particles, or Co₃O₄ particles obtained from Co(OH)₂ comprising octahedral shape particles, or Co₃O₄ particles comprising octahedral shape particles and lithium salt are heated at 800 - 1100 °C for 1 - 10 h in air or in other oxygen containing atmosphere.

2. Method of claim 1 for preparation of LiCoO₂ particles, wherein the octahedral LiCoO₂ particles have an octahedral shape with a shape of a polyhedron with eight faces and six vertexes wherein all the faces have shape of a triangle so that the height, length and depth of the octahedron are determined with the distance between three pair of opposite vertexes and the ratio of height:length:depth is in the range of 0.3-3.

3. Method of claim 1 for preparation of LiCoO₂ particles, wherein the tap density of the LiCoO₂ particles is in the range of 1.9-3.3 g/cm³.

4. Method of claim 1 for preparation of LiCoO₂ particles, wherein the surface area of the LiCoO₂ particles is in the range of 0.1 - 0.6 m²/g.

5. Method of claim 1 for preparation of LiCoO₂ particles, comprising further of adding one or more dopants selected from the group of Mg, Ca, Sr, Ti, Zr, B, Al, and F during the calcination step, of said Co(OH)₂ particles comprising octahedral shape particles, or calcination step of said Co₃O₄ particles obtained from Co(OH)₂ comprising octahedral shape particles, or calcination step of said Co₃O₄ particles comprising octahedral shape particles and lithium salt, which calcination step comprises heating at 800 - 1100 °C for 1 - 10 h in air or in other oxygen containing atmosphere, whereby the concentration of the dopants to be added is in the range of 0.05 - 5 mol-% calculated from Co of LiCoO₂ particles.

6. Method of claim 1, wherein Co(OH)₂ particles comprising octahedral shape particles are first converted to Co₃O₄ particles comprising octahedral shape particles by calcinating Co(OH)₂ particles at 110 - 1200 °C for 0.5 - 20 h in air, and then heating Co₃O₄ particles and lithium salt at 800 - 1100 °C for 1 - 10 h in air or in other oxygen containing atmosphere.

7. The method of claim 1, wherein the method further comprises precipitation of octahedral shaped Co(OH)₂ particles, and adding one or more dopants selected from the group of Mg, Ca, Sr, Ti, Zr, B, Al, and F in the precipitation step.

8. The method of claim 1 further comprising step of adding one or more dopants selected from the group of Mg, Ca, Sr, Ti, Zr, B, Al, and F in the separate step after calcination.

## Patentansprüche

1. Verfahren zur Herstellung von LiCoO₂-Partikeln, die eine oktaedrische Form aufweisen, wobei die durchschnittliche Partikelgröße D50 der LiCoO₂-Partikel im Bereich von 3 bis 30 µm liegt, **dadurch gekennzeichnet, dass** Co(OH)₂-Partikel, die Partikel mit oktaedrischer Form umfassen, oder Co₃O₄-Partikel, die aus Co(OH)₂ erhalten werden, das Partikel mit oktaedrischer Form umfasst, oder Co₃O₄-Partikel, die Partikel mit oktaedrischer Form umfassen, und Lithiumsalz für 1 -10 h auf 800 - 1100 °C in Luft oder in einer anderen sauerstoffhaltigen Atmosphäre erhitzt werden.

2. Verfahren nach Anspruch 1 zur Herstellung von LiCoO₂-Partikeln, wobei die oktaedrischen LiCoO₂-Partikel eine oktaedrische Form mit einer Form eines Polyeders mit acht Flächen und sechs Scheitelpunkten aufweisen, wobei alle Flächen eine Form eines Dreiecks derart aufweisen, dass die Höhe, Länge und Tiefe des Oktaeders durch den Abstand zwischen drei Paaren gegenüberliegender Scheitelpunkte bestimmt wird und das Verhältnis von Höhe:Länge:Tiefe im Bereich von 0,3-3 liegt.

3. Verfahren nach Anspruch 1 zur Herstellung von LiCoO₂-Partikeln, wobei die Klopfdichte der LiCoO₂-Partikel im Bereich von 1,9 - 3,3 g/cm³ liegt.

4. Verfahren nach Anspruch 1 zur Herstellung von LiCoO₂-Partikeln, wobei die Oberfläche der LiCoO₂-Partikel im Bereich von 0,1 - 0,6 m²/g liegt.

5. Verfahren nach Anspruch 1 zur Herstellung von LiCoO₂-Partikeln, ferner umfassend Zusetzen eines oder mehrerer Dotierstoffe, die aus der Gruppe von Mg, Ca, Sr, Ti, Zr, B, Al und F ausgewählt sind, während des Kalzinierungsschritts der Co(OH)₂-Partikel, die Partikel mit oktaedrischer Form umfassen, oder des Kalzinierungsschritts der Co₃O₄-Partiket, die aus Co(OH)₂ erhalten werden, das Partikel mit oktaedrischer Form umfasst, oder des Kalzinierungsschritts der Co₃O₄-Partikel, die Partikel mit oktaedrischer Form umfassen, und Lithiumsalz, wobei der Kalzinierungsschritt ein Erhitzen für 1 - 10 h auf 800 - 1100 °C in Luft oder in einer anderen sauerstoffhaltigen Atmosphäre umfasst, wobei die Konzentration der zuzusetzenden Dotierstoffe im Bereich von 0,05 - 5 Mol-%, berechnet aus Co von LiCoO₂-Partikeln liegt.

6. Verfahren nach Anspruch 1, wobei Co(OH)₂-Partikel, die Partikel mit oktaedrischer Form umfassen, zunächst in Co₃O₄-Partikel, die Partikel mit oktaedrischer Form umfassen, durch Kalzinieren von Co(OH)₂-Partikeln für 0,5 bis 20 h bei 110 bis 1200 °C in Luft umgewandelt werden, und dann Co₃O₄-Partikel und Lithiumsalz für 1 - 10 h bei 800 - 1100 °C in Luft oder in einer anderen sauerstoffhaltigen Atmosphäre erhitzt werden.

7. Verfahren nach Anspruch 1, wobei das Verfahren ferner eine Fällung von oktaedrisch geformten Co(OH)₂-Partikeln und Zusetzen eines oder mehrerer Dotierstoffe, die aus der Gruppe von Mg, Ca, Sr, Ti, Zr, B, Al und F ausgewählt sind, in dem Fällungsschritt.

8. Verfahren nach Anspruch 1, ferner umfassend einen Schritt des Zusetzens eines oder mehrerer Dotierstoffe, die aus der Gruppe von Mg, Ca, Sr, Ti, Zr, B, Al und F ausgewählt sind, in dem separaten Schritt nach der Kalzinierung.

## Revendications

1. Procédé de préparation de particules de LiCoO₂ ayant une forme octaédrique, dans lequel la taille moyenne des particules, D50, desdites particules de LiCoO₂ est dans la plage de 3 à 30 µm, **caractérisé en ce que** les particules de Co(OH)₂ comprenant des particules de forme octaédrique ou des particules de Co₃O₄ obtenues à partir du Co(OH)₂ comprenant des particules de forme octaédrique ou des particules de Co₃O₄ comprenant des particules de forme octaédrique et du sel de lithium sont chauffées entre 800 et 1100 °C pendant 1 à 10 h dans l'air ou dans une autre atmosphère contenant de l'oxygène.

2. Procédé selon la revendication 1 pour la préparation de particules de LiCoO₂, dans lequel les particules octaédriques de LiCoO₂ ont une forme octaédrique avec une forme de polyèdre à huit faces et six sommets, dans lequel toutes les faces ont la forme d'un triangle de sorte que la hauteur, la longueur et la profondeur de l'octaèdre sont déterminées avec la distance entre trois paires de sommets opposés et le rapport hauteur:longueur:profondeur est dans la plage de 0,3 à 3.

3. Procédé selon la revendication 1 pour la préparation de particules de LiCoO₂, dans lequel la densité après tassement des particules de LiCoO₂ est dans la plage de 1,9 à 3,3 g/cm³.

4. Procédé selon la revendication 1 pour la préparation de particules de LiCoO₂, dans lequel la surface des particules de LiCoO₂ est dans la plage de 0,1 à 0,6 m²/g.

5. Procédé selon la revendication 1 pour la préparation de particules de LiCoO₂, comprenant en outre l'ajout d'un ou de plusieurs dopants choisis dans le groupe de Mg, Ca, Sr, Ti, Zr, B, Al et F pendant l'étape de calcination desdites particules de Co(OH)₂ comprenant des particules de forme octaédrique, ou l'étape de calcination desdites particules de Co₃O₄ obtenues à partir du Co(OH)₂ comprenant des particules de forme octaédrique, ou l'étape de calcination desdites particules de Co₃O₄ comprenant des particules de forme octaédrique et du sel de lithium, laquelle étape de calcination comprend un chauffage entre 800 et 1100 °C pendant 1 à 10 h dans l'air ou dans une autre atmosphère contenant de l'oxygène, la concentration des dopants à ajouter se situant dans la plage de 0,05 à 5 % en moles calculé à partir du Co des particules de LiCoO₂.

6. Procédé selon la revendication 1, dans lequel les particules de Co(OH)₂ comprenant des particules de forme octaédrique sont d'abord converties en particules de Co₃O₄ comprenant des particules de forme octaédrique par calcination des particules de Co(OH)₂ entre 110 et 1200 °C pendant 0,5 à 20 h dans l'air, puis par le chauffage des particules de Co₃O₄ et du sel de lithium entre 800 et 1100 °C pendant 1 à 10 h dans l'air ou dans une autre atmosphère contenant de l'oxygène.

7. Procédé selon la revendication 1, dans lequel le procédé comprend en outre la précipitation des particules de Co(OH)₂ de forme octaédrique et l'ajout d'un ou de plusieurs dopants choisis dans le groupe de Mg, Ca, Sr, Ti, Zr, B, Al et F à l'étape de précipitation.

8. Procédé selon la revendication 1, comprenant en outre l'étape d'ajout d'un ou de plusieurs dopants choisis dans le groupe de Mg, Ca, Sr, Ti, Zr, B, Al et F à l'étape distincte après calcination.
